# EUROPEAN PATENT APPLICATION

(11) **EP 3 113 040 A1**
(43) Date of publication of application: **04.01.2017**
(21) Application number: 15175027.0
(22) Date of filing: 02.07.2015
(51) Int. Cl.: G06F 17/30, G06F 3/0484

(54) **PROVIDING A USER INTERFACE**

(71) Applicant: Zeeris Oy, 00150 Helsinki (FI)
(72) Inventor: Solapuro, Riku, 00150 Helsinki (FI); Boskovic, Zeljko, 00150 Helsinki (FI)
(74) Representative: Papula Oy

(57) **Abstract**

According to an aspect, there is provided an apparatus comprising a user interface. The user interface comprises a first area for displaying a first set of search filter elements in a matrix of search filter elements, the matrix including at least two search filter elements in the vertical and horizontal directions, wherein each search filter element, when applied, is configured to define a search scope.

## Description

### BACKGROUND

Presently, users are able to make searches with various electronic devices such as PCs, laptops, tablets and smartphones. A network search, for example, a world-wide web search, is done by entering a search query at a search engine service, such as Google, Bing and Yahoo. Search results, i.e. hits are commonly presented as a list of search result elements typically including a clickable hyperlink to the website found and some content from that website. Usually this list of elements is displayed vertically in a consecutive order. Local searches may also be performed, for example, by receiving a search query from a user and searching the contents of a file folder or folders stored on a user device or a local network.

As the world-wide web includes a lot of information, it may be difficult to find the piece of information that the user is searching. The number of hits is often a large number, thousands, hundreds of thousands and even millions of hits. Similarly, when operating a user device, it may be challenging to find a certain piece of information from the network or the user device.

### SUMMARY

The following presents a summary of the disclosure in order to provide a basic understanding to the reader. This summary is not an extensive overview of the disclosure and it does not identify key/critical elements or delineate the scope of the description. The purpose is to present concepts disclosed herein as a prelude to the more detailed description that is presented later.

According to one aspect, there is provided an apparatus comprising a user interface, the user interface comprising a first area for displaying a first set of search filter elements in a matrix of search filter elements, the matrix including at least two search filter elements in the vertical and horizontal directions, wherein each search filter element, when applied, is configured to define a search scope.

In one embodiment, at least one search filter element is a static search filter element.

In one embodiment, the static search filter element is user configurable.

In one embodiment, alternatively or in addition, at least one search filter element is an adaptive search filter element.

In one embodiment, alternatively or in addition, the user interface comprises a second area for entering a search query.

In one embodiment, alternatively or in addition, the user interface comprises a third area comprising time domain search filter elements. In one embodiment, the time domain search filter elements comprise past time search filter element, present time search filter element and future time search filter element.

In one embodiment, alternatively or in addition, in response to receiving a selection of a time domain search filter element, narrowing the search scope in time in accordance with the selected time domain search filter element.

In one embodiment, alternatively or in addition, in response to receiving a selection of a search filter element from the first set of search filter elements, the user interface is configured to provide a second set of search filter elements in the matrix, the second set of search filters being dependent on the selected search filter element of the first set.

In one embodiment, alternatively or in addition, the user interface comprises a fourth area, wherein the fourth area is configured to display at least one action element in response to a selection of a search filter element, each action element enabling initiation of an action associated with the action element.

In one embodiment, alternatively or in addition, the user interface is configured to lock a search filter element in the matrix.

In one embodiment, alternatively or in addition, the user interface comprises a user selectable action element enabling to request search results that take into account any so far selected search filter element to be displayed via the user interface.

In one embodiment, alternatively or in addition, the user interface comprises a fifth area enabling selection of the search scope. In one embodiment, the fifth area enables selection of at least one of a local device related search and a web related search.

In one embodiment, alternatively or in addition, the apparatus is an electronic user device.

According to another aspect, there is provided a non-transitory computer readable medium having stored therein instructions executable by a computing device to cause the computing device to provide search filter elements in a matrix of search filter elements in a user interface, the matrix including at least two search filter elements in the vertical and horizontal directions, wherein each search filter element, when applied, is configured to define a search scope.

According to another aspect, there is provide an apparatus that operates on a communication network to provide, to client devices, a user interface via the communication network, the apparatus comprising one or more processors, a non-transitory computer-readable medium storing instructions that implement providing search filter elements in a matrix of search filter elements in a user interface, the matrix including at least two search filter elements in the vertical and horizontal directions, wherein each search filter element, when applied, is configured to define a search scope.

According to another aspect, there is provided a method for providing a user interface, the method comprising causing display of search filter elements in a matrix of search filter elements in the user interface, the matrix including at least two search filter elements in the vertical and horizontal directions, wherein each search filter element, when selected, is configured to define a search scope.

According to another aspect, there is provided an apparatus for providing a user interface, the apparatus comprising means for causing display of search filter elements in a matrix of search filter elements in the user interface, the matrix including at least two search filter elements in the vertical and horizontal directions, wherein each search filter element, when selected, is configured to define a search scope.

In one embodiment, the method is executable at a server.

In one embodiment, the method is executable at an electronic device.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. The embodiments described below are examples only and the scope of protection shall not be limited to the presented embodiments. In the drawings:
**Fig. 1** illustrates a user interface according to one embodiment.
**Fig. 2** illustrates a user interface according to another embodiment;
**Fig. 3A** illustrates a user interface for displaying results according to one embodiment;
**Fig. 3B** illustrates a user interface for displaying results according to another embodiment;
**Fig. 4A** illustrates a user interface for enabling a user to search information.
**Fig. 4B** illustrates a user interface when the user selected a specific filter element.
**Fig. 4C** illustrates a user interface when the user selected a specific filter element.
**Fig. 4D** illustrates a user interface when the user selected a specific filter element.
**Fig. 4E** illustrates a user interface when the user selected a specific filter element.
**Fig. 4F** illustrates a user interface enabling a user to lock a search filter element.
**Fig. 5A** illustrates a user interface for enabling a user to search information.
**Fig. 5B** illustrates a user interface after the user has set a specific radius from a specific location.
**Fig. 5C** illustrates a user interface after the user has set the time or time range in addition to the location or location range.
**Fig. 5D** illustrates a user interface after the user has set the time or time range in addition to the location or location range and has selected a specific search filter element.
**Fig. 5E** illustrates a user interface for enabling a user to search information.
**Fig. 5F** illustrates a user interface when the user selected a specific search filter element.
**Fig. 6** is a system diagram depicting an apparatus for providing a user interface.
**Fig. 7** illustrates a user interface according to another embodiment.
**Fig. 8** is a system diagram depicting a system for providing search information and network elements connected to the system.

Like reference numerals are used to designate like parts in the accompanying drawings.

### DETAILED DESCRIPTION

The detailed description provided below in connection with the drawings is intended as a description of the embodiments presented herein and is not intended to represent the only forms in which the present invention may be constructed or utilized. However, the same or equivalent functions and sequences may be accomplished by different embodiments.

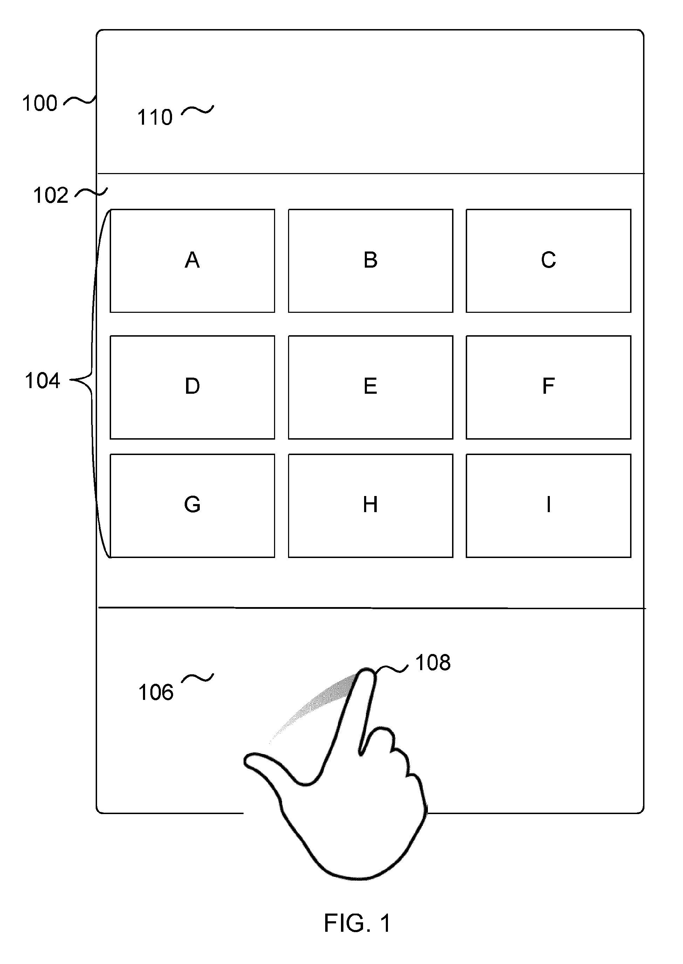

Figure 1 illustrates a user interface 100 according to one embodiment. The user interface 100 may be provided by any user operated device, for example, mobile phone, a cell phone, a smartphone, a handheld computer, a tablet computer, a Personal Digital Assistant (PDA), a laptop computer, a personal computer etc. The user interface 100 may comprise an area 110 in which a user may input a text string for search.

The user interface 100 comprises also an area 102 for displaying a set of search filter elements 104 (indicated with rectangles A-I) in a matrix of search filter elements. In this example, the matrix is a 3x3 matrix including nine search filter elements. In another embodiment, the size of the matrix may be different, for example, 2x2, 2x3, 3x3, 3x4, 4x4, 2x4 or any other size. The matrix size may also depend on the size of a display device providing the user interface 100. he user interface 100 may comprise also a touch input area 106 via which the user is able to provide touch input, for example, with a finger 108 or a stylus. Alternatively or in addition, any other way of controlling the user interface 100 and providing user input may be used, for example, voice, gestures, eye movement, motion etc.

In the example of Figure 1, the touch input area 106 is illustrated as a separate input area in the user interface 100. In another example, the touch input area 106 may not be a separate input area, and the user may be able to directly select and operate the search filter elements 104 via touch on a touch-sensitive display. In another example, the touch input area 106 may be provided by an external input device other than a device that is displaying the text input area 110 and the area 102.

The term "search filter element" may refer to any element that is configured to provide a search filter and to define or restrict a scope of a search to be made. The term "search filter element" may also refer to an element with which a user is able to navigate in the user interface. The term "search" may refer to a web search that a user wishes to make based on a search string. Alternatively or in addition, the search may refer to a local device search, a local or private network search, or an isolated network search that a user wishes to make based on a search string or by selecting the search filter elements.

The user interface 100 may also refer to a user interface of a device used to navigate through data stored in the device a network and functions and applications provided by the device. Thus, in one embodiment, the user need not input a specific search query but the user is able to carry out the search by selecting one or more search filter elements.

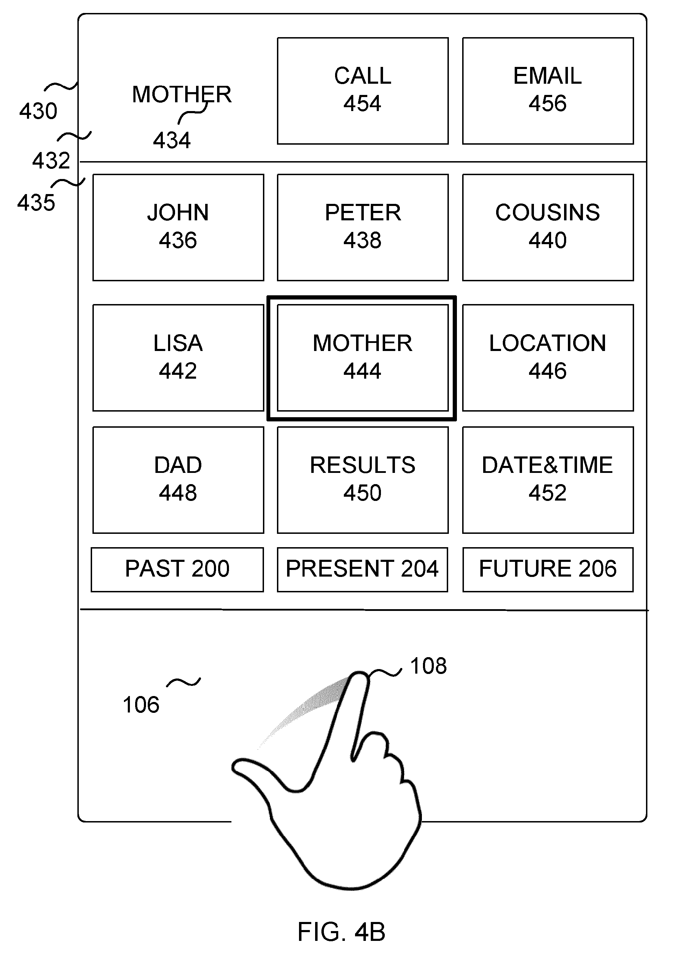

Additionally or alternatively, the area 110 may be used to display results of a search where one or more search filters relating to corresponding search filter elements have been applied. Additionally or alternatively, the area 110 may also be used to display action elements relating to the search (illustrated in more detail in Figure 4B).

When the user selects one of the search filter elements 104, a new set of search filter elements may be provided to the user in the area 102. The contents of the new set of search filter elements may depend on the selected search filter element. One or more search filter elements may be static, and they may remain unchanged also in the new set of search filter elements. Further, in one embodiment, one or more search filter elements may be adaptive. At least one of the search filter elements in the new set may depend on, for example, the context of the user or the device (for example, location, time, user or device status etc.). Further, when the user interface is initiated, the search filter elements appearing in the area 102 may not always be the same. At least one of the search filter elements may depend on, for example, the context of the user or the device (for example, location, time, user or device status etc.).

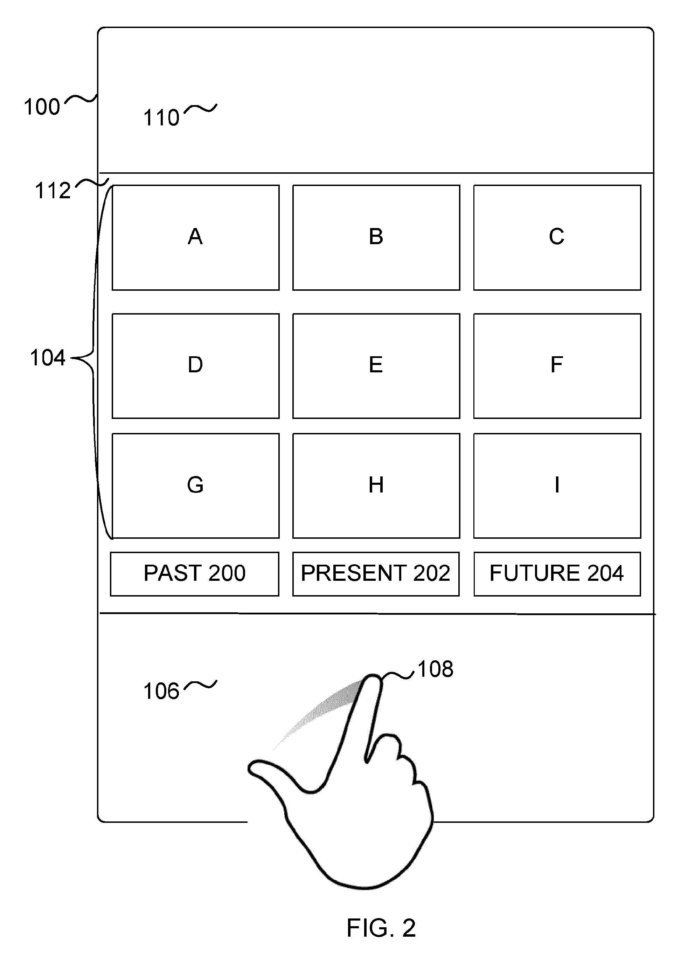

Figure 2 illustrates a user interface 112 according to one embodiment. The user interface 112 in Figure 2 is identical with the user interface 110 of Figure 1 with the exception that an area 114 for displaying the set of search filter elements 104 comprises also time domain search filter elements 200, 202, 204. The time domain filter 200 "PAST" enables the user to direct the search to elements or information from the past. The time domain filter 202 "PRESENT" enables the user to direct the search to real-time elements or information or close to real-time. The time domain filter 204 "FUTURE" enables the user to direct the search to scheduled events and predictions. Although the time domain search filters elements 200, 202, 204 are illustrated in Figure 2 to appear below the search filter elements 104, their location on the user interface 100 may vary depending on the implementation.

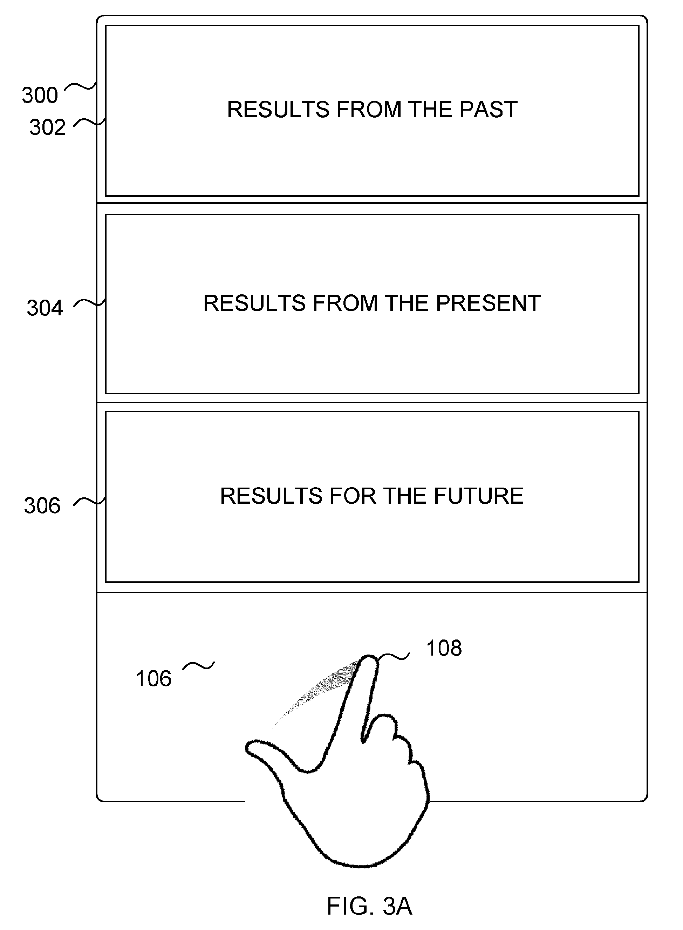

Figure 3A illustrates a user interface 300 for displaying results according to one embodiment. One of the search filter elements 104 in the area 102 of Figure 1 may enable the user to obtain results based on search filter elements applied so far. The user interface 300 may be provided when the user provides an indication to he wants to have search results based on search filters applied so far. In the embodiment of Figure 3A, three separate result areas 302, 304, 306 are shown. The area 302 displays results from the past. The area 304 displays real-time results or results relating to present time or closed to the present time. The area 306 displays scheduled events in the future and predictions. If all results cannot be displayed in the areas 300, 302, 304 at the same time, the user may use the touch input area 106 to select with his finger 108 or a stylus the area he wants to expand further. Alternatively or in addition, any other way of controlling the user interface 300 and providing user input may be used, for example, voice, gestures, eye movement, motion etc. In another embodiment, the results may be provided in a single area without time domain separation.

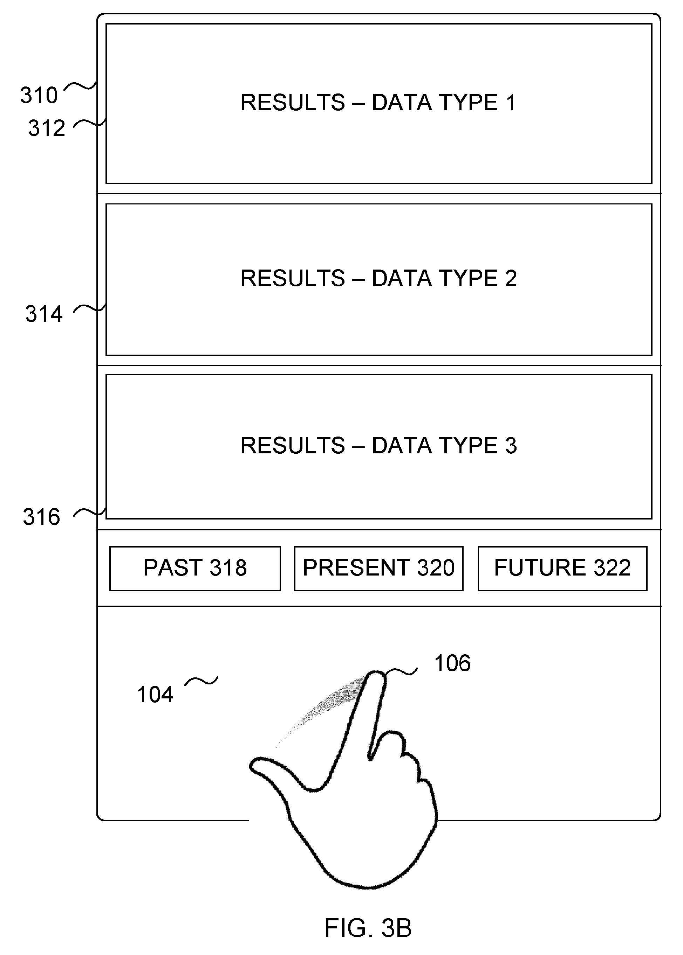

Figure 3B illustrates a user interface 310 for displaying results according to another embodiment. The user interface 310 is similar to the user interface 300 illustrated in Figure 3A with the exception that time domain search filters 318, 320, 322 have not been applied yet. Another difference is that the results 312, 314, 316 are categorized based on data types. The first result area 312 displays results of a first data type, the second result area 314 displays results of a second data type and the third result area 316 displays results of a third data type. A data type may be, for example, a document, a calendar event, an image file, a web link, traffic information, weather information, financial information, an email, a social network update, wellness information, a reminder, browser history data, audio, video and other media consumed in the past etc. In general, a data type may refer to any type of data that can be categorized, for example, personal data, financial data, professional data (for example, patient history, medical values, treatment data) etc. If the user selects one of the time domain search filter elements 318, 320, 322, the results in the areas 312, 314, 316 may be updated to correspond to the selected time domain search filter element. In one embodiment of Figure 3B, the time domain search filter elements 318, 320, 322 are not shown at all.

If all results cannot be displayed at the same time, the user may use the touch input area 106 or other input means to select with his finger 108 the area he wants to expand further. Further, at least one search result may be presented in the form of an action element. For example, if the search results include a reminder for making a phone call, a call icon may be made available to the user in the user interface so that the user is able to initiate a phone call by selecting the call icon.

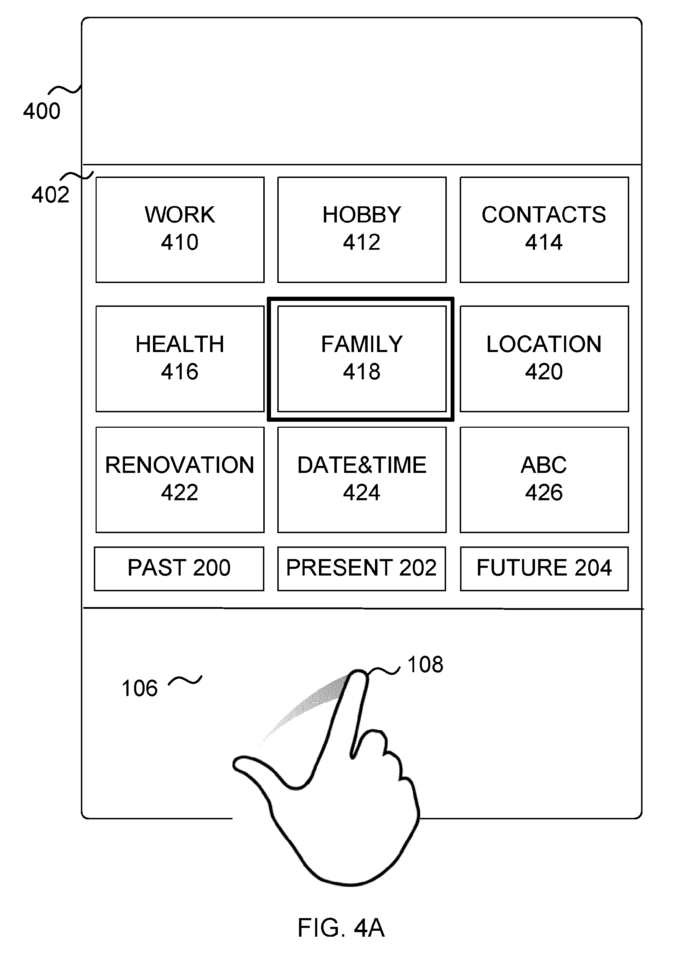

Figure 4A illustrates a user interface 400 for enabling a user to search information. The user interface 400 is similar to the user interface 100 illustrated in Figure 1.

An area 402 includes a set of search filter elements 410-426. The user interface 400 may be provided, for example, by a mobile device of the user. An operating system or an application executed by the mobile device may provide the user interface. Alternatively, the user interface 400 may be generated in a network server and the mobile device just displays the user interface 400. The search filters elements 410-426 appearing in the area 402 may be user configurable. Additionally or alternatively, they may also depend on a context of the mobile device or the user. The context may take into account time, location, a user status, a user profile or any other piece of information relating to the mobile device or the user.

The user interface 400 may also provide time domain search filter elements 200, 202, 204 enabling the user to direct his search to certain time domain.

As illustrated in Figure 1, the user may control the area 402 operating a touch input area 106, for example, with a finger 108. Instead of providing a separate touch input area 106, the area 402 may be touch-sensitive and the user may select a search filter element by touching the search filter element.

The area 402 may comprise a search filter element 426 with which the user is able to input a search string at any of point of time.

Some of the search filter elements may enable a specific value or a range to be set, for example, the search filter element "DATE&TIME" 424. When the user selects this search filter element, the user may be given the possibility to set a specific range, for example "between 1 January 2015 - 31 May 2015" or "today between 10:00am and 4:00pm" for the search filter element "DATE&TIME" 424. If the user selects the search filter element "LOCATION" 420, the user may be given the possibility to input a specific location or to provide a range from a specific location.

The search filter "FAMILY" 418 may appear as a preselected search filter element as illustrated by the bolded rectangle in the middle of an area 402. The user may move the bolded rectangle by operating the touch input area 106, for example, with the finger 108 or a stylus. In another example, none of the search filter elements appears as a preselected search filter element, and the user may select a desired search filter element, for example, by touching the search filter element on the touch-sensitive area 402.

Figure 4B illustrates a user interface 430 when the user selected the search filter element "FAMILY" 418 in Figure 4A. The user may have previously determined the person(s) to be allocated under "FAMILY". This information may be stored, for example, in a user profile. Search filter elements "LOCATION" 446 and "DATE&TIME" 452 may be user-set static search filter elements, or alternatively, they may be adaptively determined after the user selected "FAMILY" 418.

The search filter "MOTHER" 442 may appear as a preselected search filter element as illustrated by the bolded rectangle in the middle of an area 435. A result area 432 may indicate that "MOTHER" 434 as a preselected search filter element. The area 432 may also comprise one or more action elements relating to the preselected search filter element "MOTHER" 444. If the user selects "CALL" 454 or "EMAIL" 456, a call is initiated to "MOTHER" or an email can be sent to "MOTHER".

The area 435 may comprise a search filter element 450 with which the user is able to request search results to be shown at any of point of time. Alternatively or in addition, the user may also be able to request search results at any point of time within the area 106 with a predetermined touch gesture or other gesture using a device displaying the user interface 430, for example, shaking or tilting the device.

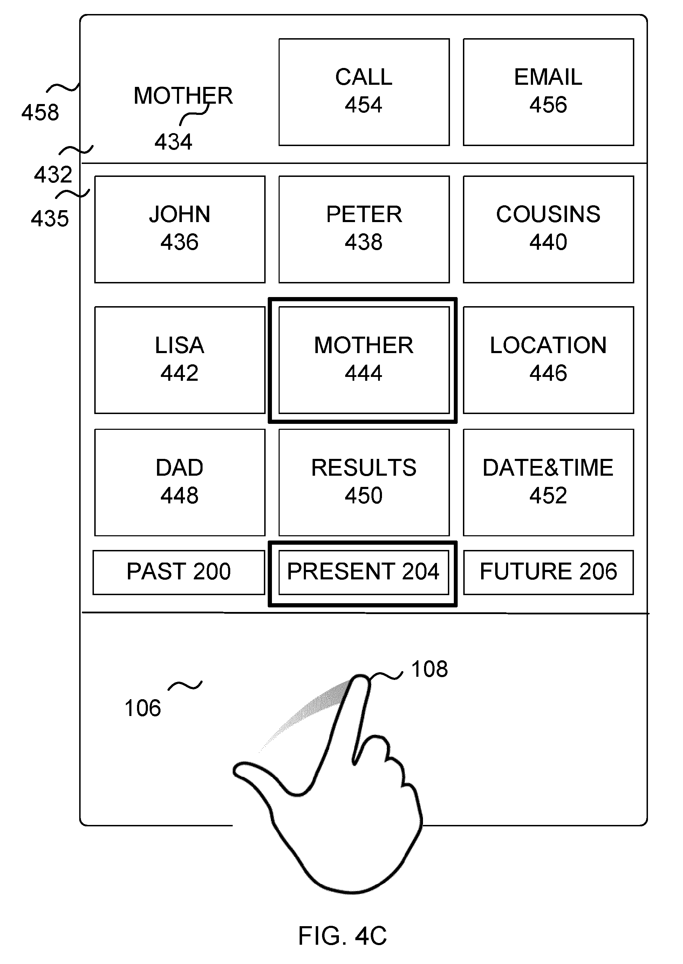

Figure 4C illustrates a user interface 458 when the user selected the search filter element "MOTHER" 444 in Figure 4B. The user interface 458 is identical with the user interface 430 with the exception that the user selects also a time domain search filter "PRESENT" 204.

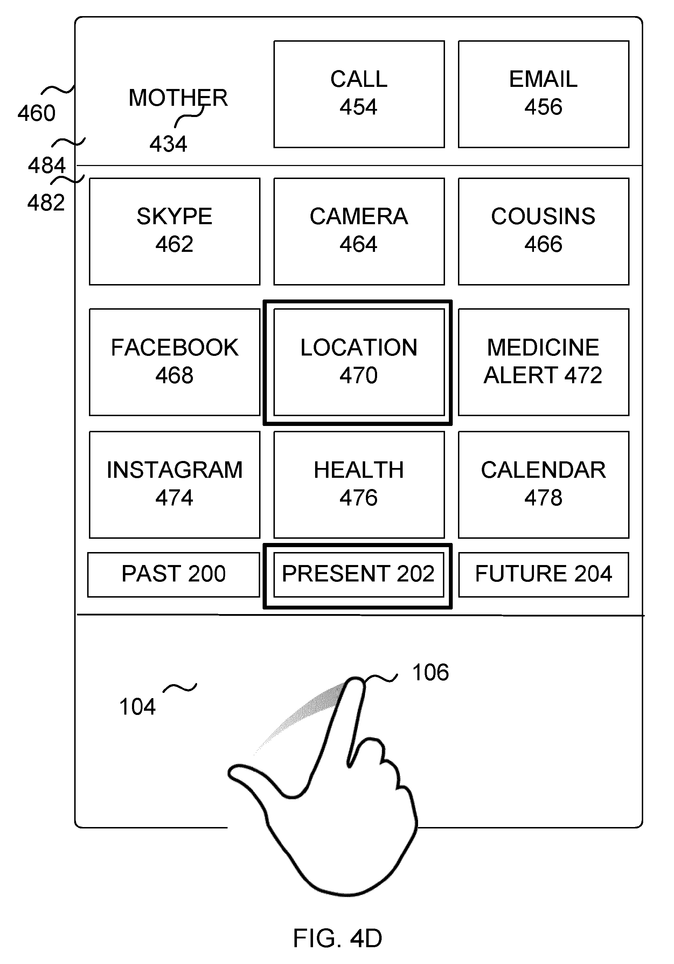

Figure 4D illustrates a user interface 460 when the user selected the search filter elements "MOTHER" 444 and "PRESENT" 202 in Figure 4B.

As illustrated already in Figure 4B, a result area 484 may indicate that that "MOTHER" 444 has previously been selected. The result area 484 may still comprise the action elements relating to the preselected search filter element "MOTHER" 444. If the user selects "CALL" 454 or "EMAIL" 456, a call is initiated to "MOTHER" or an email can be sent to "MOTHER".

After the user selected the search filter element "MOTHER" 444 in Figure 4C, a new set of search filter elements is shown to the user in an area 478. A search filter element "LOCATION" 470 appears now as a preselected search filter element as illustrated by the bolded rectangle in the middle of the area 482. Further, the search filter element "PRESENT" 204 appears preselected since it was selected in Figure 4C.

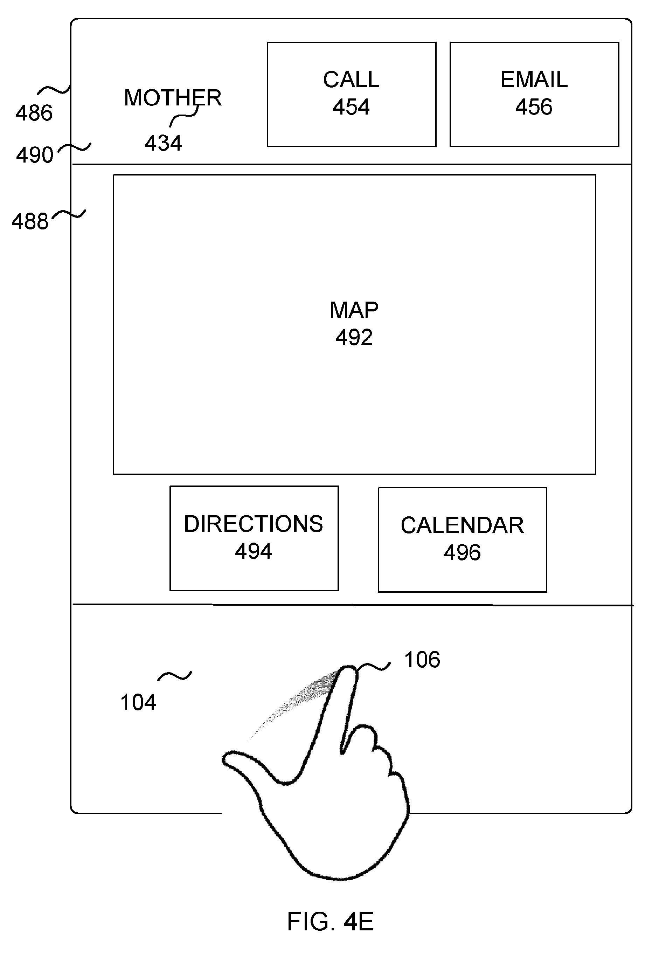

Figure 4E illustrates a user interface 486 when the user selected the search filter element "LOCATION" 470 in Figure 4D.

As illustrated already in Figure 4B in the result area 432, a result area 490 may indicate that "MOTHER" 444 has been previously selected. The result area 490 may still comprise the action elements relating to the selected search filter element "MOTHER" 444. If the user selects "CALL" 454 or "EMAIL" 456, a call is initiated to "MOTHER" or an email can be sent to "MOTHER".

An area 488 now displays a map 492 that indicates the current location of the mother. The area 488 may display some additional action elements relating to the map, for example, "DIRECTIONS" 494 or "CALENDAR 496. If the user selects "DIRECTIONS" 494, the user will be given a route to the mother's location. If the user selects "CALENDAR" 496, the user will be shown the mother's calendar.

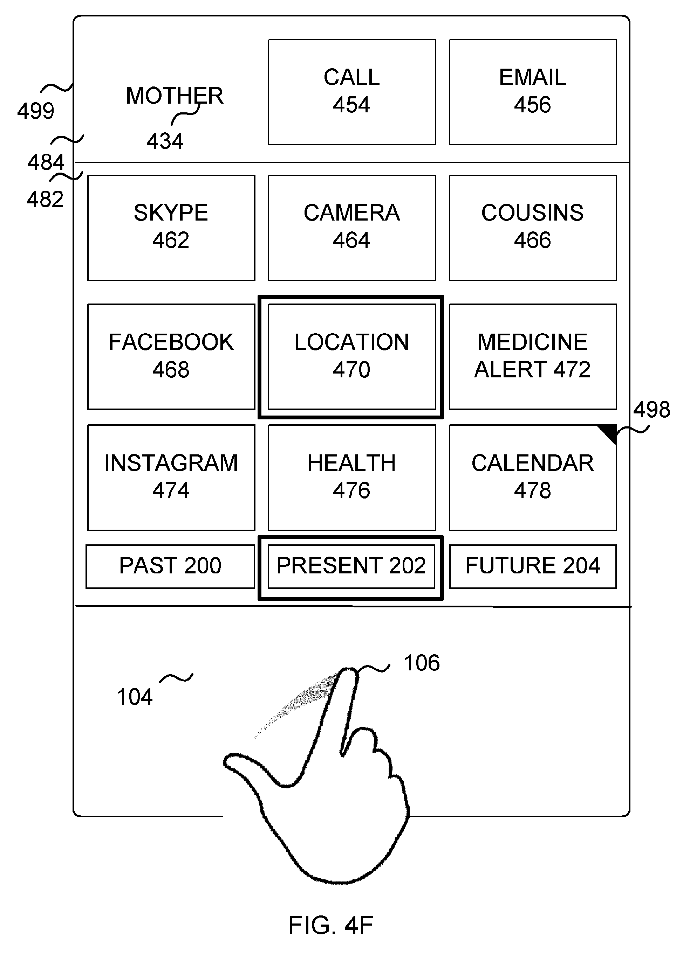

Figure 4F illustrates a user interface 499 enabling a user to lock a search filter element. The user interface 499 in Figure 4F is identical with the user interface 460 in Figure 4D with the exception that one of the search filter elements ("CALENDAR" 478) is provided with a corner identifier 498. The corner identifier 498 provides an indication that the user has locked the search filter element 478. The locking may be implemented, for example, so that the user selects the desired search filter element and holds the selection for a predetermined period, for example, two seconds. The corner identifier 498 then appears on the search filter element 478. The locking of the search filter element 478 may remain active even if the user proceeds further and selects another search filter element to be applied. Similarly, if the user returns back to the previous search filter element level (for example, from the user interface 499 back to the user interface 458), the search filter element "CALENDAR" 478 may still remain as a locked search filter element and appear on the user interface 458).

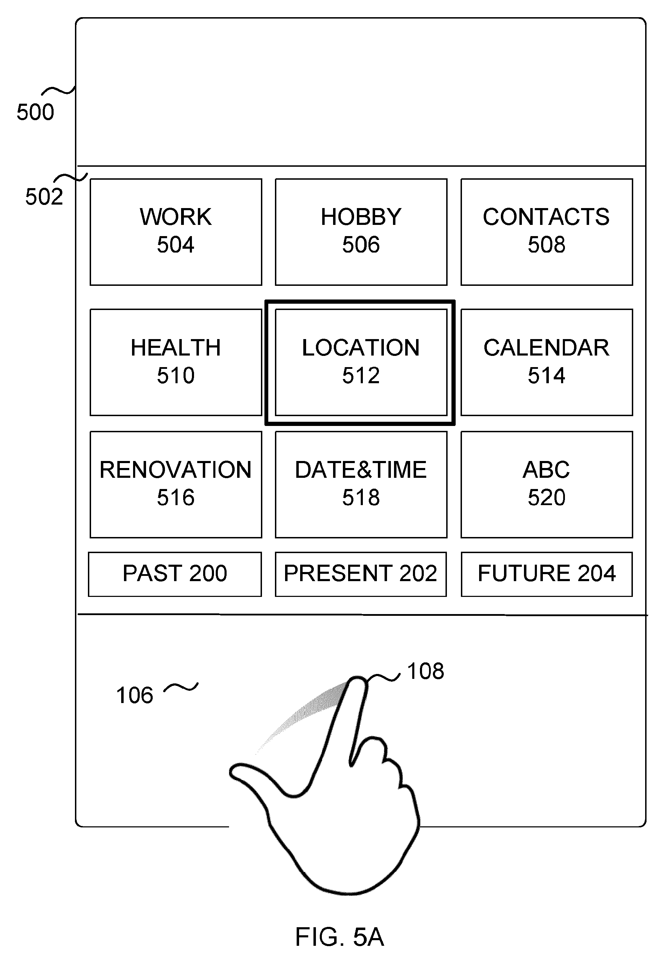

Figure 5A illustrates a user interface 500 for enabling a user to search information. The user interface 500 is similar to the user interface 100 illustrated in Figure 1.

An area 502 includes a set of search filter elements 504-520. The user interface 500 may be provided, for example, by a mobile device of the user. The search filters elements 504-520 appearing in the area 502 may be user configurable. Additionally or alternatively, they may also depend on a context of the mobile device or the user. The context may take into account time, location, a user status, a user profile or any other piece of information relating to the mobile device or the user.

The user interface 500 may also provide time domain search filter elements 200, 202, 204 enabling the user to direct his search to certain time domain.

As illustrated in Figure 1, the user may control the area 502 operating a touch input area 106, for example, with a finger 108. Instead of providing a separate touch input area 106, the area 502 may be touch-sensitive and the user may select a search filter element by touching the search filter element.

In this example, the user selects a search filter "LOCATION" 512. In response to the selection, the user is able to select a specific location (for example, an address or a geo location) or set a certain radius from the specific location. In this example, the user set a radius of one kilometre starting from a specific address (Bulevardi 1, Helsinki, Finland).

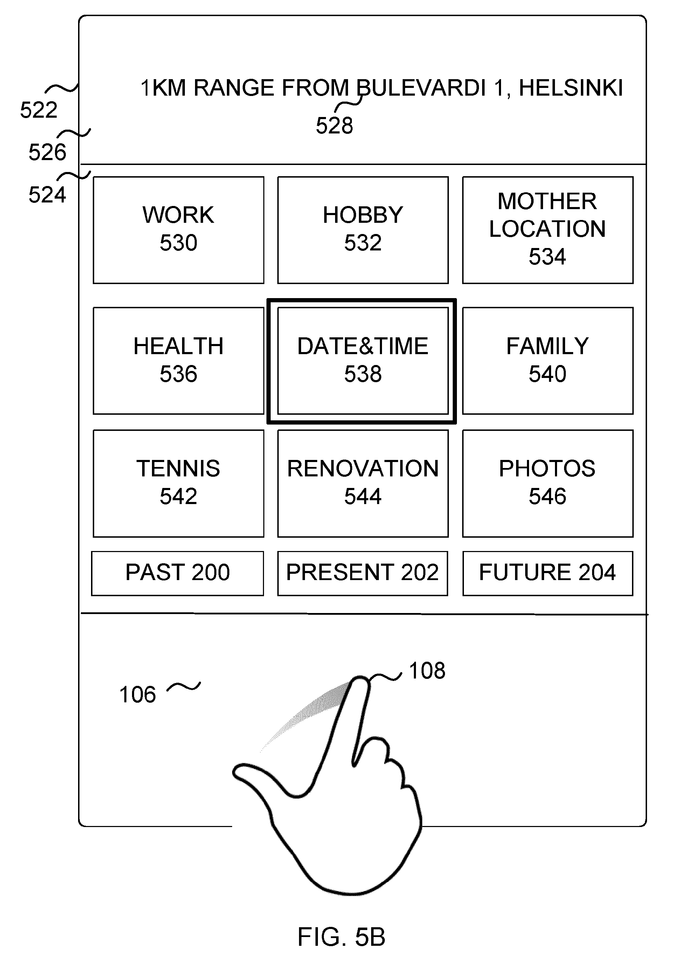

Figure 5B illustrates a user interface 522 after the user has set a specific radius of one kilometre from a specific location. An area 526 in the user interface 522 displays the set radius 528. An area 524 displays a new set of search filter elements 530-546. In this example, the user selects the search filter element "DATE&TIME" 538. In response to the selection, the user is able to set a specific time interval to provide an additional search filter to the search filter "LOCATION" 512. The user sets a range of time 1 January 2011 - 1 March 2011 as the search filter. This can be done by directly selected the starting and ends points. Alternatively, the user is able to set a specific date and then to set a range of ±N weeks from the set date.

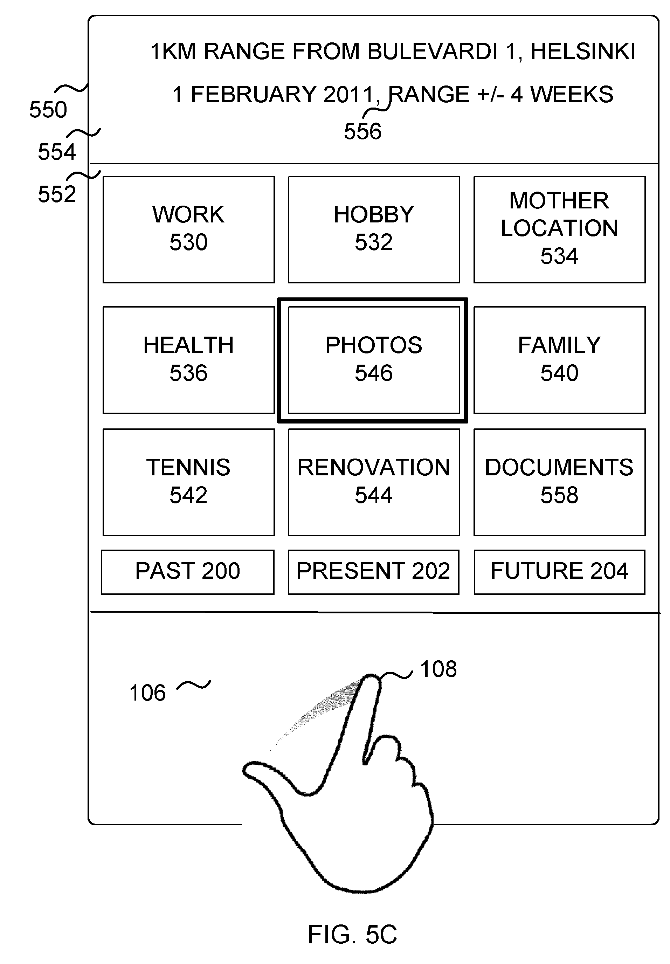

Figure 5C illustrates a user interface 550 after the user has set the time or time range in addition to the location or location range. An area 554 in the user interface 550 displays the location and time ranges 556 set so far. An area 552 displays a set of search filter elements. One or more of the search filter elements may change or remain the same compared to the search filter elements in Figure 5B.

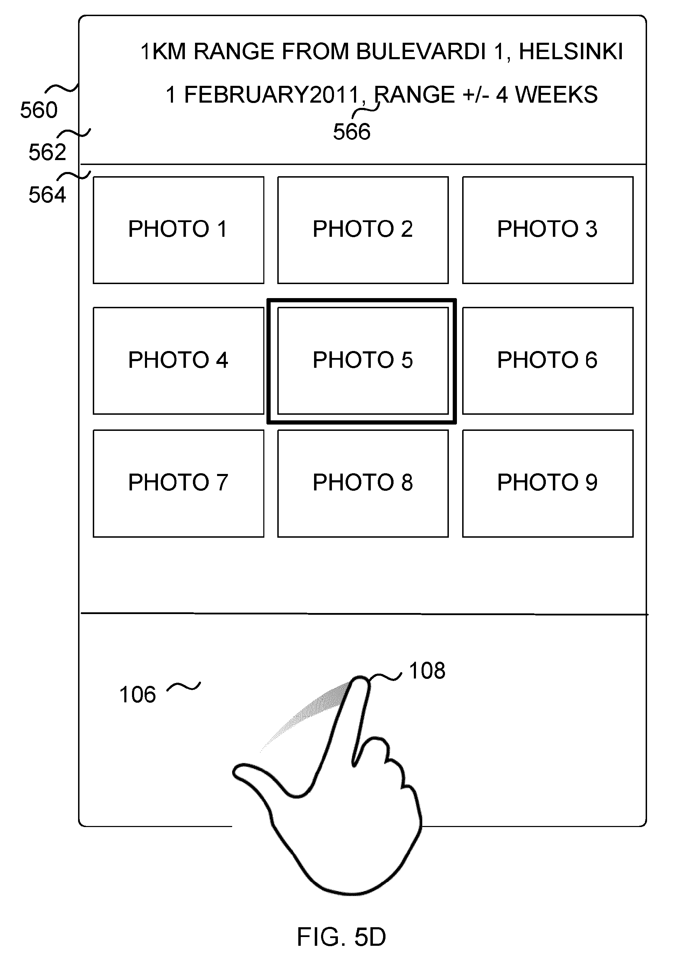

Figure 5D illustrates a user interface 560 after the user has set the time or time range in addition to the location or location range and has selected the search filter element "PHOTOS" 546. An area 562 in the user interface 560 displays the location and time ranges 566 set so far. In response to the search filter element "PHOTOS" 546 selection, an area 564 now displays a set of photos that match the set search filter elements, i.e. the location and time.

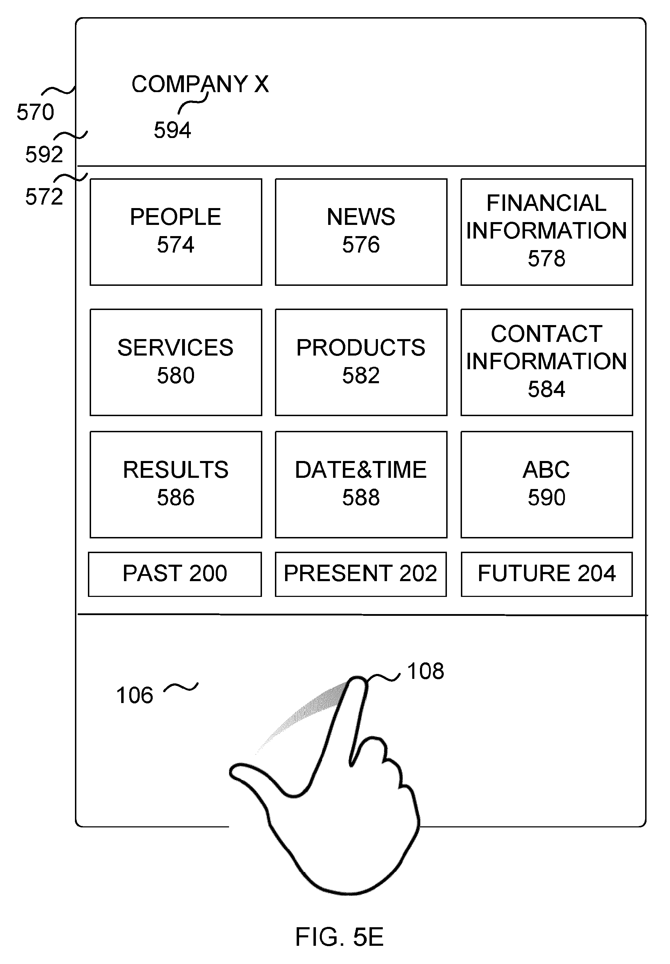

Figure 5E illustrates a user interface 570 for enabling a user to search information. The user interface 570 is similar to the user interface 100 illustrated in Figure 1.

An area 572 includes a set of search filter elements 574-590. The user interface 570 may be provided, for example, by a mobile device of the user. An operating system or an application executed by the mobile device may provide the user interface. Alternatively, the user interface 570 may be generated in a network server and the mobile device just displays the user interface 570. The user interface 570 may also provide time domain search filter elements 200, 202, 204 enabling the user to direct his search to certain time domain.

As illustrated in Figure 1, the user may control the area 572 operating a touch input area 106, for example, with a finger 108 or a stylus. Instead of providing a separate touch input area 106, the area 572 may be touch-sensitive and the user may select a search filter element by touching any of the search filter elements.

The embodiment in Figure 5E illustrates a network search example. For example, the search may be performed in a local or private network or in the internet. Prior to receiving the user interface 572, the user may have entered a search query "COMPANY X". In other words, the user wishes to search information about "COMPANY X". The input search query 594 may be shown in an area 592 of the user interface 570.

In response to the query 594, the set of search filter elements 574-590 is provided to the user on the user interface 570. The set of search filter elements 574-590 shown on the user interface 570 may be determined by the device showing the user interface 570 or a network server or apparatus providing the user interface to the device via a communication network. Each search filter element, when selected or applied, defines or restricts the search further.

If the search filter element matrix in the area 572 does not show a desired search filter element, the user is able to specify the query by selecting the search filter element "ABC" 590 and provide an additional search string. For example, after the user selected the search filter element "ABC" 590, a keyboard may be provided to user in the area 572 and the user is able to specify the query.

At any point of time, the user is able to request search results based on the so far applied search filter elements by selecting, for example, the "RESULTS" element 586. Further, by selecting the "DATE&TIME" search filter element 588, the user is able to specify a specific date or time range for the search.

The user interface 570 may also include time domain search filter elements 200, 202, 204. The time domain filter 200 "PAST" enables the user to direct the search to elements or information from the past. The time domain filter 202 "PRESENT" enables the user to direct the search to real-time elements or information or close to real-time. The time domain filter 204 "FUTURE" enables the user to direct the search to scheduled events and predictions.

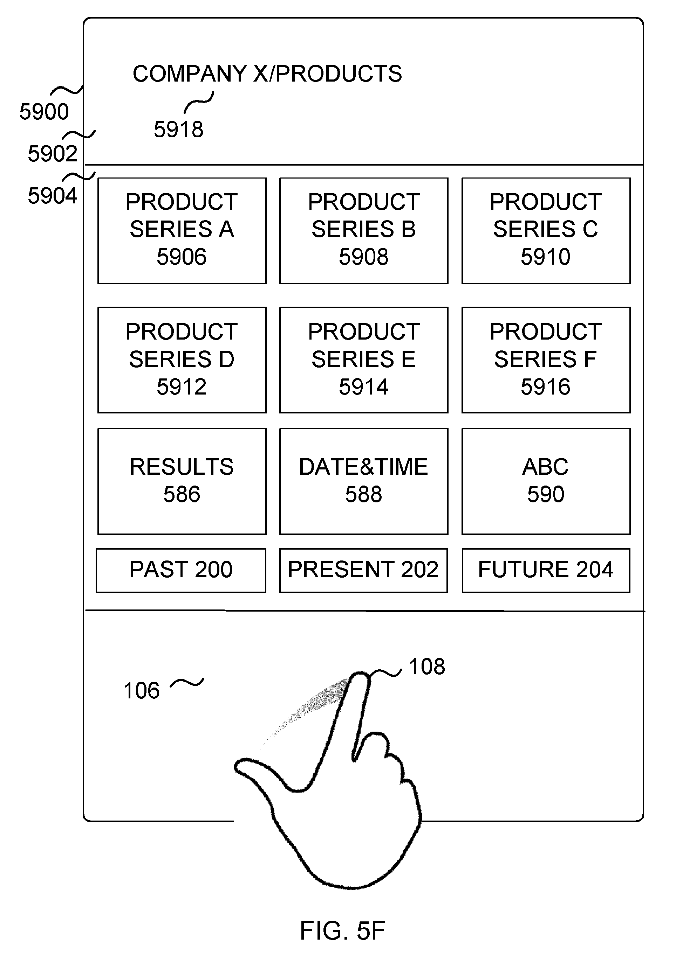

Figure 5F illustrates a user interface 5900 after the user selected the search filter element "PRODUCTS" 582 in Figure 5F. An area 5904 in the user interface 5900 now illustrates a new set of search filter elements. The search filter elements 5906-5914 represent different products series. The search filter elements 586-590 have remained unchanged in this example. An area 5902 may show the search filters 5918 applied so far. Again, at any point of time, the user may request final search results based on the so far applied search filter elements by selecting, for example, the "RESULTS" element 586.

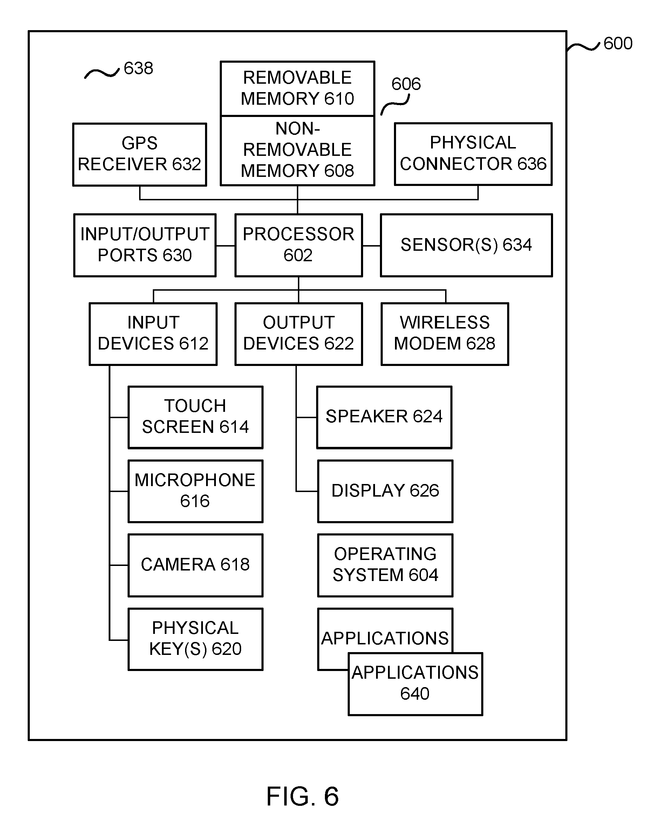

Figure 6 is a system diagram depicting an apparatus 600 for providing a user interface including a variety of optional hardware and software components, shown generally at 638. Any components 638 in the apparatus 600 can communicate with any other component, although not all connections are shown, for ease of illustration. The apparatus 600 can be any of a variety of computing devices that includes a camera (for example, a cell phone, a smartphone, a handheld computer, a tablet computer, a Personal Digital Assistant (PDA), etc.), a laptop computer, a personal computer, a server computer in a network etc.

The illustrated apparatus 600 can include a controller or processor 602 (e.g., signal processor, microprocessor, ASIC, or other control and processing logic circuitry) for performing such tasks as signal coding, data processing, input/output processing, power control, and/or other functions. An operating system 604 can control the allocation and usage of the components 638 and support for one or more application programs 640. The application programs can include common mobile computing applications (e.g., email applications, calendars, contact managers, web browsers, messaging applications), or any other computing application.

The illustrated apparatus 600 can include a memory 606. The memory 606 can include non-removable memory 608 and/or removable memory 610. The non-removable memory 608 can include RAM, ROM, flash memory, a hard disk, or other well-known memory storage technologies. The removable memory 610 can include flash memory or a Subscriber Identity Module (SIM) card, which is well known in mobile communication systems, or other well-known memory storage technologies, such as "smart cards". The memory 606 can be used for storing data and/or code for running the operating system 604 and the applications 640. If the apparatus 600 is a mobile phone or smart phone, the memory 506 can be used to store a subscriber identifier, such as an International Mobile Subscriber Identity (IMSI), and an equipment identifier, such as an International Mobile Equipment Identifier (IMEI). Such identifiers can be transmitted to a network server to identify users and equipment.

The apparatus 600 can support one or more input devices 612, such as a touchscreen 614, microphone 616, camera 618 and/or physical keys or a keyboard 620 and one or more output devices 622, such as a speaker 624 and a display 626. Some devices can serve more than one input/output function. For example, the touchscreen 614 and the display 626 can be combined in a single input/output device. The input devices 612 can include a Natural User Interface (NUI). An NUI is any interface technology that enables a user to interact with a device in a "natural" manner, free from artificial constraints imposed by input devices such as mice, keyboards, remote controls, and the like. Examples of NUI methods include those relying on speech recognition, touch and stylus recognition, gesture recognition both on screen and adjacent to the screen, air gestures, head and eye tracking, voice and speech, vision, touch, gestures, and machine intelligence. Other examples of a NUI include motion gesture detection using accelerometers/gyroscopes, facial recognition, 3D displays, head, eye, and gaze tracking, immersive augmented reality and virtual reality systems, all of which provide a more natural interface, as well as technologies for sensing brain activity using electric field sensing electrodes (EEG and related methods). Thus, in one specific example, the operating system 604 or applications 640 can comprise speech-recognition software as part of a voice user interface that allows a user to operate the apparatus 600 via voice commands. Further, the apparatus 600 can comprise input devices and software that allows for user interaction via a user's spatial gestures, such as detecting and interpreting gestures to provide input to a gaming application.

A wireless modem 628 can be coupled to an antenna (not shown) and can support two-way communications between the processor 602 and external devices, as is well understood in the art. The modem 628 is shown generically and can include a cellular modem for communicating with the mobile communication network and/or other radio-based modems (e.g., Bluetooth or Wi-Fi). The wireless modem 628 is typically configured for communication with one or more cellular networks, such as a GSM network for data and voice communications within a single cellular network, a WCDMA (Wideband Code Division Multiple Access) network, an LTE (Long Term Evolution) network, a 4G LTE network, between cellular networks, or between the mobile apparatus and a public switched telephone network (PSTN) etc.

The apparatus 600 can further include at least one input/output port 630, a satellite navigation system receiver 132, such as a Global Positioning System (GPS) receiver, one or more sensors 634, and/or a physical connector 636, which can be a USB port, IEEE 1394 (FireWire) port, an Ethernet port and/or RS-232 port. The sensor 634 may refer to any sensor that is able to provide information about the apparatus 600, the user of the apparatus 600 or the surroundings of the apparatus 600. The sensor 634 may comprise, for example, an accelerometer, a gyroscope, a light sensor, a temperature sensor, a motion detector, air quality sensor, radiation sensor, etc.

The illustrated components 638 are not required or all-inclusive, as any components can deleted and other components can be added.

In another embodiment of Figure 6, the apparatus 600 is a server apparatus that provides a user interface to a user apparatus via a communication link, for example, via the internet. In this embodiment, the apparatus 600 need not include, for example, a touch screen, a display, a camera, a speaker etc. in order to be able to provide the user interface to the user apparatus. In a server based solution the server is also able to use information relating to a plurality of users when providing the user interface to a user device.

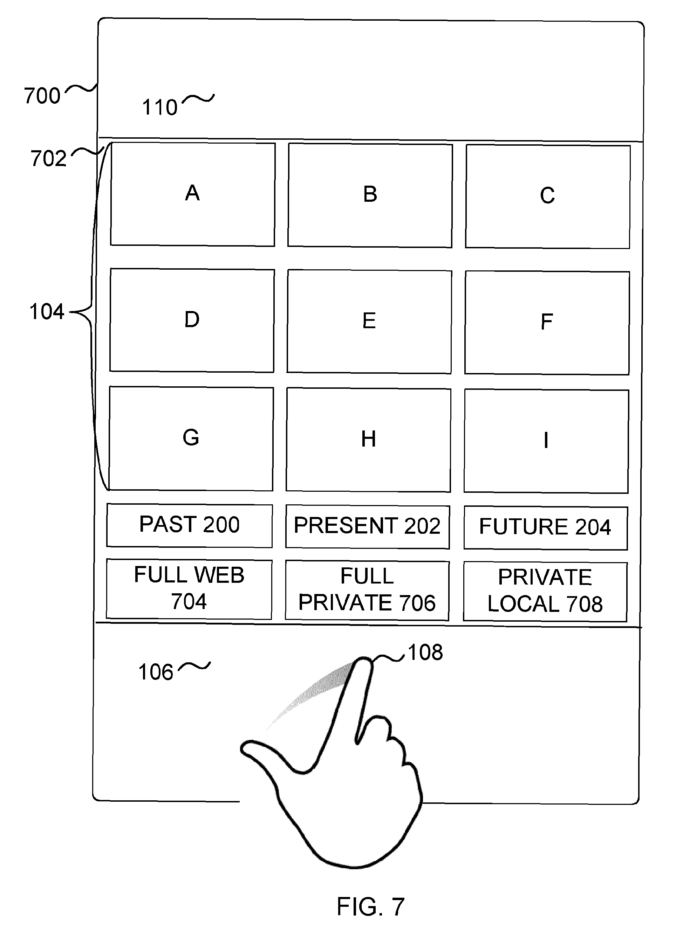

Figure 7 illustrates a user interface 700 according to another embodiment. An area 702 in the user interface 700 illustrated in Figure 7 is similar to the area disclosed in Figure 2 with the exception that additional search filter elements 704, 706, 708 are provided.

The search filter elements 704, 706, 708 enable the user to select the source of data from which results will be searched for. "FULL WEB" 704 provides search results from the entire internet. "FULL PRIVATE" 706 provides search results from all private data stored locally and/or on external service providers. "PRIVATE LOCAL" 708 provides search results from data within a local ecosystem (for example, a user device and/or connected devices and/or sensors).

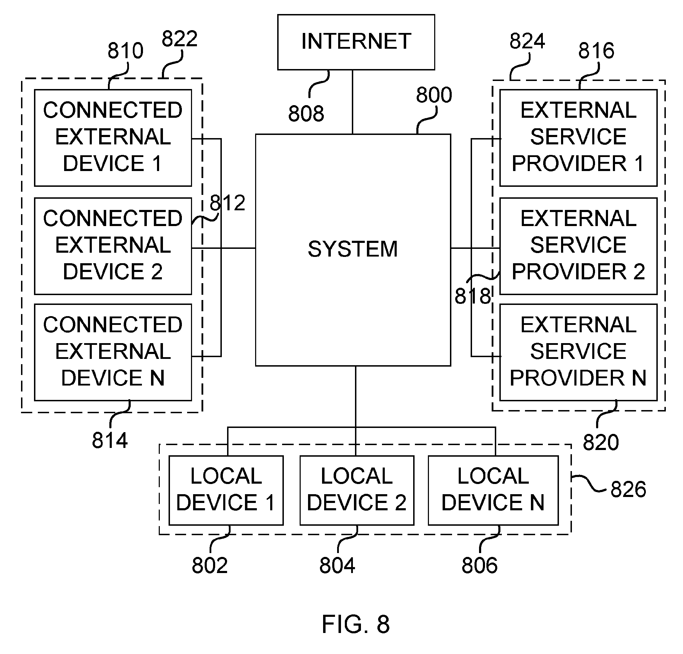

Figure 8 is a system diagram depicting a system 800 for providing search information and network elements connected to the system 800. The structure of the system 800 has been discussed in more detail in Figure 6.

One or more local devices 802, 804, 806 may be connected to the system 800. Further, one or more external devices 810, 812, 814 may be connected to the system 800. External devices 810, 812, 814 may refer to devices that are controlled by a user. The user may also determine that certain devices not controlled by the user himself belong to the external devices 810, 812, 814 (for example, user devices of other family members). External service providers 816, 818, 820 refer to service providers that contain information relating to the user, for example, various cloud services, Facebook, Instagram etc.

When the user indicates in the user interface 700 that a search filter element "FULL WEB" 704 is to be applied, the search is limited to the internet 808. When the user indicates in the user interface 700 that a search filter element "FULL PRIVATE" 706 is to be applied, the search is limited to all private data stored locally and/or on external service providers, illustrated using the dashed rectangles 822, 824 and 826. When the user indicates in the user interface 700 that a search filter element "PRIVATE LOCAL" 708 is to be applied, the search is limited to results from data within a local ecosystem (for example, a user device and/or connected devices and/or sensors), as illustrated with dashed rectangles 822 and 826.

When the search filter element "FULL PRIVATE" 706 is applied, it may refer to all private data including privately protected data, for example, from social networks (for example, the user's own social network posts that are visible only to the user's social network, which may not be fully public).

When the search filter element "PRIVATE LOCAL" 708 is applied, the system 800 may or may not be connected to any external network. For example, the local ecosystem may be completely an isolated network within an organization or in private possession.

A technical effect of one or more embodiments is that a new intuitive approach is provided for a user interface for using a user device or for searching information from the user device and/or the internet.

A technical effect of one or more embodiments is that the user is able to enter multiple search elements without a need to know any search operators (for example, AND, OR, etc.

A technical effect of one or more embodiments is that a faster data entry is provided. Since search filter elements can be selected from a matrix of search filter elements, the user need not provide complicated menu based selections.

A technical effect of one or more embodiments is that the risk of input errors is minimized since the user is able to select search filter elements from the matrix without typing.

A technical effect of one or more embodiments is that data types and search filter elements provided in the matrix can take into account the user and/or the apparatus providing the user interface, i.e. the data types and the search filter elements provided to the user are context dependent.

A technical effect of one or more embodiments is that the user is able to create a search without knowing detailed information. For example, the user need not know a specific address, a geo tag or a geographical range can be used.

The embodiments described hereinbefore may be used in any combination with each other. Several of the embodiments may be combined together to form a further embodiment. A product or a method, to which the invention is related, may comprise at least one of the embodiments described hereinbefore.

Computer executable instructions may be provided using any computer-readable media that is accessible by computing based device. Computer-readable media may include, for example, computer storage media such as memory and communications media. Computer storage media, such as memory, includes volatile and non-volatile, removable and non-removable media implemented in any method or technology for storage of information such as computer readable instructions, data structures, program modules or other data. Computer storage media includes, but is not limited to, RAM, ROM, EPROM, EEPROM, flash memory or other memory technology, CD-ROM, digital versatile disks (DVD) or other optical storage, magnetic cassettes, magnetic tape, magnetic disk storage or other magnetic storage devices, or any other non-transmission medium that can be used to store information for access by a computing device. In contrast, communication media may embody computer readable instructions, data structures, program modules, or other data in a modulated data signal, such as a carrier wave, or other transport mechanism. As defined herein, computer storage media does not include communication media. Therefore, a computer storage medium should not be interpreted to be a propagating signal per se. Propagated signals may be present in a computer storage media, but propagated signals per se are not examples of computer storage media. Although the computer storage media is shown within the computing-based device it will be appreciated that the storage may be distributed or located remotely and accessed via a network or other communication link, for example by using communication interface.

The term 'computer' or 'computing-based device' is used herein to refer to any device with processing capability such that it can execute instructions. Those skilled in the art will realize that such processing capabilities are incorporated into many different devices and therefore the terms 'computer' and 'computing-based device' each include PCs, servers, mobile telephones (including smart phones), tablet computers, set-top boxes, media players, games consoles, personal digital assistants and many other devices.

The methods described herein may be performed by software in machine readable form on a tangible storage medium e.g. in the form of a computer program comprising computer program code means adapted to perform all the steps of any of the methods described herein when the program is run on a computer and where the computer program may be embodied on a computer readable medium. Examples of tangible storage media include computer storage devices comprising computer-readable media such as disks, thumb drives, memory etc. and do not include propagated signals. Propagated signals may be present in a tangible storage media, but propagated signals per se are not examples of tangible storage media. The software can be suitable for execution on a parallel processor or a serial processor such that the method steps may be carried out in any suitable order, or simultaneously.

This acknowledges that software can be a valuable, separately tradable commodity. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

Alternatively, or in addition, the functionality described herein (such as the encryption and the biometric recognition algorithm) can be performed, at least in part, by one or more hardware logic components. For example, and without limitation, illustrative types of hardware logic components that can be used include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), Graphics Processing Units (GPUs). For example, some or all of the device functionality or method sequences may be performed by one or more hardware logic components.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

It will be understood that the benefits and advantages described above may relate to one embodiment or may relate to several embodiments. The embodiments are not limited to those that solve any or all of the stated problems or those that have any or all of the stated benefits and advantages.

The steps of the methods described herein may be carried out in any suitable order, or simultaneously where appropriate. Additionally, individual blocks may be deleted from any of the methods without departing from the spirit and scope of the subject matter described herein. Aspects of any of the examples described above may be combined with aspects of any of the other examples described to form further examples without losing the effect sought.

The term 'comprising' is used herein to mean including the method blocks or elements identified, but that such blocks or elements do not comprise an exclusive list and a method or apparatus may contain additional blocks or elements.

It will be understood that the above description is given by way of example only and that with the advancement of technology, the basic idea of the invention may be implemented in various ways. The invention and its embodiments are thus not limited to the embodiments described above; instead they may vary within the scope of the claims.

## Claims

1. An apparatus comprising a user interface, the user interface comprising:
a first area for displaying a first set of search filter elements in a matrix of search filter elements, the matrix including at least two search filter elements in the vertical and horizontal directions;
wherein each search filter element, when applied, is configured to define a search scope.

2. The apparatus of claim 1, wherein at least one search filter element is a static search filter element.

3. The apparatus of claim 2, wherein the static search filter element is user configurable.

4. The apparatus of any of claims 1 - 3, wherein at least one search filter element is an adaptive search filter element.

5. The apparatus of any of claims 1 - 4, wherein the user interface comprises a second area for entering a search query.

6. The apparatus of any of claims 1 - 5, wherein the user interface comprises a third area comprising time domain search filter elements.

7. The apparatus of claim 6, wherein the time domain search filter elements comprise past time search filter element, present time search filter element and future time search filter element.

8. The apparatus of claim 6 or 7, wherein in response to receiving a selection of a time domain search filter element, narrowing the search scope in time in accordance with the selected time domain search filter element.

9. The apparatus of any of claims 1 - 8, wherein in response to receiving a selection of a search filter element from the first set of search filter elements, the user interface is configured to provide a second set of search filter elements in the matrix, the second set of search filters being dependent on the selected search filter element of the first set.

10. The apparatus of any of claims 1 - 9, wherein the user interface comprises a fourth area, wherein the fourth area is configured to display at least one action element in response to a selection of a search filter element, each action element enabling initiation of an action associated with the action element.

11. The apparatus of any of claims 1 - 10, wherein the user interface is configured to lock a search filter element in the matrix.

12. The apparatus of any of claims 1 - 11, wherein the user interface comprises a user selectable action element enabling to request search results that take into account any so far selected search filter element to be displayed via the user interface.

13. The apparatus of any of claims 1 - 12, wherein the user interface comprises a fifth area enabling selection of the search scope.

14. The apparatus of claim 13, wherein the fifth area enables selection of at least one of a local device related search and a web related search.

15. The apparatus of any of claims 1 - 14, wherein the apparatus is an electronic user device.

16. A non-transitory computer readable medium having stored therein instructions executable by a computing device to cause the computing device to provide search filter elements in a matrix of search filter elements in a user interface, the matrix including at least two search filter elements in the vertical and horizontal directions, wherein each search filter element, when applied, is configured to define a search scope.

17. An apparatus that operates on a communication network to provide, to client devices, a user interface via the communication network, the apparatus comprising:
one or more processors;
a non-transitory computer-readable medium storing instructions that implement providing search filter elements in a matrix of search filter elements in a user interface, the matrix including at least two search filter elements in the vertical and horizontal directions, wherein each search filter element, when applied, is configured to define a search scope.

18. A method for providing a user interface, the method comprising:
causing display of search filter elements in a matrix of search filter elements in the user interface, the matrix including at least two search filter elements in the vertical and horizontal directions;
wherein each search filter element, when selected, is configured to define a search scope.

19. A method of claim 18, wherein the method is executable at a server.

20. A method of claim 18, wherein the method is executable at an electronic device.
